# EUROPÄISCHE PATENTSCHRIFT

(11) **EP 4 170 317 B1**
(45) Veröffentlichungstag und Bekanntmachung des Hinweises auf die Patenterteilung: **02.12.2026**
(21) Anmeldenummer: 21203778.2
(22) Anmeldetag: 20.10.2021
(51) Int. Cl.: G01N 11/14

(54) **MESSSYSTEM UND VERFAHREN ZUM BESTIMMEN RHEOLOGISCHER KENNZAHLEN**
MEASURING SYSTEM AND METHOD FOR DETERMINING RHEOLOGICAL CHARACTERISTICS
SYSTÈME DE MESURE ET PROCÉDÉ DE DÉTERMINATION DES INDICATEURS RHÉOLOGIQUES

(43) Veröffentlichungstag der Anmeldung: 26.04.2023
(73) Patentinhaber: Anton Paar TorqueTec GmbH, 47055 Duisburg (DE)
(72) Erfinder: Schäfer, Viktor, 40474 Düsseldorf (DE)
(74) Vertreter: Michalski Hüttermann & Partner mbB

(56) Entgegenhaltungen:
- WO-A1-2018/134859
- WO-A1-2020/159523
- US-A1- 2006 075 805
- US-A1- 2019 170 628

## Beschreibung

### Technisches Gebiet

Die vorliegende Erfindung betrifft ein Messsystem und ein Verfahren zum Bestimmen zumindest einer rheologischen Kennzahl eines Mediums, wobei das Messsystem aufweist: einen Testbehälter, einen Antrieb zum Antreiben zumindest eines in dem Testbehälter angeordneten Rotationskörpers, den zumindest einen in dem Testbehälter angeordneten Rotationskörper, einen Sensor zum Erfassen von Messwerten von an dem Rotationskörper anliegenden Drehmomenten, einen Prozessor zum Empfangen und Verarbeiten der Messwerte, einen Speicher zum Speichern der Messwerte, wobei der Rotationskörper und der Antrieb ausgestaltet sind, in dem Testbehälter das Medium durch eine definierte Rotation des Rotationskörpers einer Scherung auszusetzen und der Sensor ausgestaltet ist, bei der definierten Rotation des Rotationskörpers Messwerte zu messen, der Prozessor ausgestaltet ist, die Messwerte zu empfangen und zu verarbeiten und der Speicher ausgestaltet ist, die Messwerte zu speichern.

Des Weiteren betrifft die vorliegende Erfindung eine Vorrichtung zur Datenverarbeitung, geeignet zur Verwendung in einem solchen Messsystem oder in einem Verfahren.

Des Weiteren betrifft die vorliegende Erfindung ein Computerprogrammprodukt, geeignet zur Verwendung in einem solchen Messsystem oder in einem Verfahren.

### Hintergrund der Erfindung

Bislang bekannt sind Verfahren zum Bestimmen rheologischer Kennzahlen mit einem vorbeschriebenen Rotationsrheometer, bei denen die Messwerte erfasst und gespeichert werden, wobei das Verfahren über einen Zeitraum ausgeführt wird, der sicher ausreicht, damit alle Messwerte erfasst und gespeichert sind, die zur nachträglichen Bestimmung der Kennzahlen notwendig sind. Nachteilig muss ein solcher Zeitraum vergleichsweise lang gewählt werden, um bei sich unterschiedlich verhaltenden Medien sicher alle notwendigen Messwerte zu erfassen und zu speichern, so dass das Verfahren insgesamt zeitaufwändig ist.

Einige Medien, wie beispielsweise Teige aus Mehl und Wasser, zeigen ein zeitabhängiges rheologisches Verhalten. Das heißt: ist das Medium einer Scherung, insbesondere einer gleichbleibenden Scherung, über einen längeren Zeitraum ausgesetzt, ändern sich seine rheologischen Eigenschaften zeitabhängig. Bei Teigen sinkt beispielsweise die Viskosität, wenn dieser über einen längeren Zeitraum geknetet wird. Der Teig erweicht, wird dabei fließfähiger und es muss ein geringeres Drehmoment an einem Knetwerkzeug aufgebracht werden, um den Teig zu kneten. Das genaue Verhalten unterscheidet sich abhängig von der Mehlqualität, wobei für die Verarbeitung solcher Mehle bzw. Teige in industriellem Maßstab ein Bedürfnis besteht, das genaue Verhalten des Mehls bzw. eines daraus hergestellten Teigs zu kennen.

Um ein Maß für die Erweichung eines Teigs zu ermitteln, kann ein vorgenanntes Verfahren wie folgt ausgestaltet werden. Zuerst wird Mehl beispielsweise durch eine verschließbare Öffnung in den Testbehälter gefüllt und die Rotation sowie die das Erfassen und Speichern der Messwerte gestartet. Dem Testbehälter wird dann, beispielsweise wiederum durch eine verschließbare Öffnung, Wasser zugeführt, so dass aus Mehl und Wasser bei fortlaufendem Kneten ein Teig entsteht. Die Wassermenge wird dabei beispielsweise so gewählt, dass der Teig zunächst eine bestimmte Viskosität erreicht. Der Teig wird daraufhin über einen Zeitraum durch die Rotation geknetet und dabei das zum Halten der definierten Rotation aufzuwendende Drehmoment erfasst und gespeichert. Dabei kann in einem vorgenannten Verfahren beispielsweise eine Teigerweichungskennzahl bestimmt werden, die die Viskosität des Teigs 12 Minuten nach Beginn der Teigerweichung in ein Verhältnis zu der Viskosität zu Beginn der Teigerweichung setzt. Eine solche Definition entspricht dem ICC Standard No. 115/1:1992, der AACC Methode, 54-12:1995 sowie der ISO 5530-1:2013. Entsprechend den gleichen Normen ist auch eine Stabilitätskennzahl bestimmbar, die die Zeit erfasst, die die Viskosität oberhalb der bestimmten Viskosität verbleibt, bevor sie darunter abfällt. Um beispielsweise die vorgenannten Kennzahlen bei Teigen sicher zu erfassen, muss der vorgenannte Zeitraum ausreichend lang gewählt werden.

Aus WO 2020/159523 A1 ist ein Rheometer zum Einsatz in Schutzbereichen, zum beispielsweise bei Ölbohrungen, bekannt. Dabei wird in einem Verfahren eine Scherrate eingestellt und bei Erreichen der Scherrate ein Schermoment erfasst.

Aus US 2006/075805 A1 ist weiterhin ein Verfahren zum Betreiben eines Rheometers bekannt. Dabei wird das Rheometer mit einer ersten Geschwindigkeit betrieben, bis ein Ziel-Drehmoment erreicht ist, anschließend bei einer zweiten Geschwindigkeit, bis erneut das Ziel-Drehmoment erreicht ist, und iterativ in entsprechender Weise fort, um das Fluid über mehrere Größenordnungen der Viskosität vermessen zu können. Das Verfahren wird abgebrochen, sobald ein Abbruchkriterium erreicht ist.

Aus US 2019/170628 A1 ist weiterhin eine Kalibriervorrichtung für ein Rheometer bekannt, die mit einer Testwelle des Rheometers verbunden ist. Durch eine Beschleunigung der Kalibriervorrichtung wird ein definiertes Kalibrier-Drehmoment an dem Rheometer aufgebracht.

Aus WO 2018/134859 A1 ist ferner ein Verfahren zur Herstellung eines Gebäcks bekannt.

### Beschreibung der Erfindung

Ausgehend von dieser Situation ist es eine Aufgabe der vorliegenden Erfindung, ein verbessertes Messsystem und ein verbessertes Verfahren zur Verfügung zu stellen. Bevorzugt besteht die Aufgabe darin, die notwenige Messzeit bei einem Verfahren zum Bestimmen zumindest einer rheologischen Kennzahl zu verkürzen.

Die Aufgabe der Erfindung wird durch die Merkmale der unabhängigen Hauptansprüche gelöst. Vorteilhafte Ausgestaltungen sind in den Unteransprüchen angegeben. Sofern technisch möglich, können die Lehren der Unteransprüche beliebig mit den Lehren der Haupt- und Unteransprüche kombiniert werden.

Nachfolgend werden vorteilige Aspekte der beanspruchten Erfindung erläutert und weiter nachfolgend bevorzugte modifizierte Ausführungsformen der Erfindung beschrieben.

Erläuterungen, insbesondere zu Vorteilen und Definitionen von Merkmalen, sind dem Grunde nach beschreibende und bevorzugte, jedoch nicht limitierende Beispiele. Sofern eine Erläuterung limitierend ist, wird dies ausdrücklich erwähnt.

Es ist bevorzugt, dass die Reihenfolge von Verfahrensschritten, soweit nicht technisch in einer expliziten Reihenfolge erforderlich, variiert werden kann. Besonders bevorzugt ist jedoch die vorgenannte Reihenfolge der Verfahrensschritte.

Die Aufgabe wird gelöst durch ein Messsystem gemäß Anspruch 1. Bei dem Messsystem handelt es sich insbesondere um ein Rotationsrheometer. Das Messsystem ist ausgestaltet zum Bestimmen zumindest einer rheologischen Kennzahl eines Mediums. Das Messsystem weist auf: einen Testbehälter, einen Antrieb zum Antreiben zumindest eines in dem Testbehälter angeordneten Rotationskörpers, den zumindest einen in dem Testbehälter angeordneten Rotationskörper, einen Sensor zum Erfassen von Messwerten von an dem Rotationskörper anliegenden Drehmomenten, einen Prozessor zum Empfangen und Verarbeiten der Messwerte und einen Speicher zum Speichern der Messwerte. Der Rotationskörper und der Antrieb sind ausgestaltet, in dem Testbehälter das Medium durch eine definierte Rotation des Rotationskörpers einer Scherung auszusetzen. Der Sensor ist ausgestaltet, bei der definierten Rotation des Rotationskörpers Messwerte zu messen, und der Prozessor ist ausgestaltet, die Messwerte zu empfangen und zu verarbeiten und der Speicher ist ausgestaltet, die Messwerte zu speichern. Das Messsystem, insbesondere der Prozessor, ist ausgestaltet, die erfassten und in dem Speicher gespeicherten Messwerte fortlaufend mit bekannten Messwerten zu vergleichen und bei einer ausreichenden Übereinstimmung anhand der bekannten Messwerte weitere Messwerte zu prognostizieren, wobei der Prozessor ausgestaltet ist, fortlaufend zu überprüfen, ob zur Bestimmung zumindest einer rheologischen Kennzahl notwendige Messwerte sicher prognostiziert sind, und wobei das Messsystem ausgestaltet ist, die Rotation des Rotationskörpers zu beenden, sobald die notwendigen Messwerte sicher prognostiziert sind.

Die Aufgabe wird zudem gelöst durch ein Verfahren nach dem Oberbegriff des Anspruch 7, bei dem vorgesehen ist, die erfassten und in dem Speicher gespeicherten Messwerte fortlaufend mit bekannten Messwerten zu vergleichen und bei einer ausreichenden Übereinstimmung anhand der bekannten Messwerte weitere Messwerte zu prognostizieren, wobei fortlaufend überprüft wird, ob zur Bestimmung zumindest einer rheologischen Kennzahl notwendige Messwerte sicher prognostiziert sind, und wobei die Rotation des Rotationskörpers beenden wird, sobald die notwendigen Messwerte sicher prognostiziert sind.

Das Verfahren wird insofern nicht mehr über einen Zeitraum ausgeführt, der mit einer ausreichenden Sicherheit gewählt werden muss, um sicherzustellen, dass alle Messwerte vorliegen, sondern wird genau dann beendet, wenn dies der Fall ist, und zwar indem die Rotation des Messkörpers gestoppt wird. Dazu werden die Messwerte, während sie erfasst und gespeichert werden, in Echtzeit dahingehend überprüft, ob die mindestens eine zu bestimmende Kennzahl bereits bestimmbar ist. Es kann dabei definiert sein, welche Messerwerte für die Bestimmung der Kennzahlen benötigt werden, oder es kann eine Auswertung der Messwerte im Sinne einer Berechnung von Kennzahlen durchgeführt werden. Bei einem Teig aus Mehl und Wasser wird so beispielsweise während dem Erfassen und Speichern der Messwerte bereits der Zeitpunkt des Beginns der Teigerweichung erkannt und das Verfahren wird bei Vorliegen des Messwerts zum Bestimmen der Teigerweichungskennzahl genau 12 Minuten nach diesem Zeitpunkt gestoppt. Bei der Bestimmung der Stabilitätskennzahl wird das Verfahren beispielsweise durch Anhalten des Rotationskörpers beendet, wenn durch die fortlaufende Überprüfung oder eine fortlaufende Auswertung erkannt wird, dass die Viskosität des Teigs unter die bestimmte Viskosität abfällt.

Als Kennzahl wird eine aus den Messwerten abgeleitete Größe bezeichnet, die als Kennzahl im verfahrenstechnischen Sinne einheitslos sein kann. Eine Kennzahl kann jedoch im Sinne der Erfindung auch eine aus den Messwerten abgeleitete Größe mit einer Einheit sein. Beispielweise ist die vorgenannte Stabilitätskennzahl bei Teigen eine Zeit. Für verschiedene Medien oder Systeme aus Rotationsrheometern und Medien sind solche rheologischen Kennzahlen bekannt oder können definiert werden. Dabei ist die Lehre der Erfindung darauf gerichtet, das Verfahren zu beenden, sobald ein definierter Messwert zur Bestimmung einer Kennzahl vorliegt. Insbesondere ist das Verfahren darauf gerichtet, beendet zu werden, wenn alle Messwerte für mehrere zu bestimmende Kennzahlen vorliegen.

Ein Medium ist ein beliebiges Fluid oder weist Eigenschaften eines Festkörpers sowie fluidischen Eigenschaften auf. Insbesondere ist das Medium ein Teig, eine Paste, ein Gel, ein Pulver, eine Flüssigkeit oder ein Gas. Insbesondere ist das Medium ein Teig aus zumindest Mehl und Wasser oder eine Mischung aus einem Pulver mit Öl. Das Pulver ist beispielsweise Ruß, Kalk, Talk, Aluminiumoxid, Silica, ein kosmetischer Puder oder ein Pigmentpulver. Bei einem Teig ist beispielsweise eine Kennzahl die Teigentwicklungszeit, die Stabilitätskennzahl, die Teigerweichungskennzahl oder die durch das Mehl absorbierbare Wassermenge. Insofern der zunächst Teig auf eine bestimmte Viskosität eingestellt wird, ist auch die Menge von absorbiertem Wasser bis zum Erreichen der bestimmten Viskosität als Kennzahl von Interesse. Bei Ruß, Kalk, Talk, Aluminiumoxid, Silica, kosmetischem Puder oder Pigmentpulver ist insbesondere die Ölzahl nach ASTM D 2414:2021 bzw. ASTM D 6854:2012 von Interesse.

Ein Rotationskörper ist insbesondere ein Knethaken, ein Knetmesser oder ein Zylinder, etwa mit einer Oberflächenkontur. Insofern der Rotationskörper eine definierte Rotation ausführt, ist dies beispielsweise eine Rotation mit einer konstanten oder lediglich in einem kleinen Bereich variierenden Drehzahl. Die Drehzahl kann auch einen bekannten, definierten Verlauf nehmen. Insofern mehrere Rotationskörper in dem Testbehälter angeordnet sind, ist die Drehzahl der mehreren Rotationskörper insbesondere gleich, wobei die Winkelstellung der mehreren Rotationskörper zueinander bekannt und gleichbleibend ist. Mehrere Rotationskörper können auch mit bekannten unterschiedlichen Drehzahlen rotieren.

Das Erfassen von Messwerten bezeichnet das tatsächliche Messen des Messwerts durch den Sensor bei der Ausführung des Verfahrens. Ein erfasster Messwert gibt das tatsächliche Verhalten des Mediums zu dem Zeitpunkt des Erfassens wieder. Erfasste Messwerte werden in dem Speicher als Daten gespeichert und besonders bevorzugt während der Messung grafisch dargestellt, insbesondere als Graf des Drehmoments über der Zeit. Der Speicher ist dabei insbesondere ein nicht-flüchtiger Speicher. Die Messwerte können auch nach dem Durchführen des Verfahrens grafisch dargestellt werden, beispielsweise als insbesondere druckbare Datei.

Insofern das Medium einer Scherung ausgesetzt wird, wird darunter beispielsweise verstanden, dass das Medium durchmischt oder gerührt wird oder zwischen zwei parallelen, sich zueinander bewegenden Wänden in einem Spalt mit einer Scherung beaufschlagt wird. Dabei setzt die Viskosität des Mediums der Scherung einen Widerstand entgegen, der proportional zu dem mittels des Rotationskörpers aufzubringenden Drehmoment ist.

Unter einer fortlaufenden Überprüfung, ob zur Bestimmung zumindest einer rheologischen Kennzahl notwendige Messwerte vorliegen, wird verstanden, dass die Überprüfung während dem Erfassen und Speichern der Messwerte wiederholt erfolgt. Dabei kann die Überprüfung in kurzen Zeitabständen von einer Bedienperson des Rotationsrheometers durchgeführt werden oder besonders bevorzugt automatisiert durch den Prozessor. Insbesondere wird der Zeitabstand zwischen den Wiederholungen der Überprüfungen so kurz gewählt, dass die Überprüfung als echtzeitig wahrgenommen wird. Besonders bevorzugt wird die Überprüfung bei einer grafischen Darstellung der gespeicherten Messwerte während der Messung angezeigt oder grafisch dargestellt.

Unter notwendigen Messwerten werden diejenigen Messwerte verstanden, welche zum Berechnen von Auswertepunkten erforderlich sind. Mittels der Auswertepunkte wird/werden dann wiederum die rheologische(n) Kennzahl(en) bestimmt. Zumindest aber eine rheologische Kennzahl muss anhand der Auswertepunkte bestimmbar sein. Insbesondere handelt es sich bei den Auswertepunkten um Messwerte bei Messungen an dem Medium. Weiterhin wird unter einem Vorliegen der notwendigen Messwerte verstanden, dass diese in dem Speicher verfügbar sind.

Gemäß der Erfindung ist vorgesehen, dass der Prozessor ausgestaltet ist, fortlaufend zu überprüfen, ob zur Bestimmung zumindest einer rheologischen Kennzahl notwendige Messwerte vorliegen. Bevorzugt wird gemäß dem Verfahren durch den Prozessor fortlaufend überprüft, ob zur Bestimmung zumindest einer rheologischen Kennzahl notwendige Messwerte vorliegen.

Mittels des Prozessors ist die Überprüfung automatisiert und in kurzer Zeitschrittfolge durchführbar und unabhängig von einer bedienenden Person.

Gemäß der Erfindung ist der Prozessor ausgestaltet, fortlaufend zu überprüfen, ob zur Bestimmung zumindest einer rheologischen Kennzahl notwendige Messwerte erfasst und in dem Speicher gespeichert sind, und das Messsystem ausgestaltet ist, die Rotation des Rotationskörpers zu beenden, sobald die notwendigen Messwerte erfasst und gespeichert sind. Hierbei kann der Prozessor ausgestaltet sein, ein entsprechendes Steuersignal an den Rotationskörper zum Beenden der Rotation auszugeben.

Bei dem Verfahren wird entsprechend fortlaufend überprüft, ob zur Bestimmung zumindest einer rheologischen Kennzahl notwendige Messwerte erfasst und in dem Speicher gespeichert sind, wobei die Rotation des Rotationskörpers beendet wird, sobald die notwendigen Messwerte erfasst und gespeichert sind. Das Verfahren wird dabei also über einen Zeitraum betrieben, bis die notwendigen Messwerte tatsächlich an dem Medium vorliegen und gemessen werden. Ein Zeitgewinn bei dem Verfahren ist dann insofern bzw. insoweit zu erreichen, dass das Verfahren unmittelbar bei Vorliegen der erfassten Messwerte beendet werden kann. In einer alternativen Ausführungsform werden Messwerte prognostiziert und liegen insofern vor, wenn sie sicher prognostiziert sind. Dabei wird unter einer sicheren Prognose verstanden, dass die Prognose die Messwerte mit einer geringen Fehlerwahrscheinlichkeit vorhersagt. Eine sichere Prognose wird insbesondere auf erfasste Messwerte gestützt und wird tendenziell sicherer, umso mehr Messwerte erfasst sind. Umso länger das Verfahren demnach durchgeführt wird, umso sicherer können weitere Messwerte prognostiziert werden. Das Verfahren ist dann insbesondere darauf gerichtet, dass das Verfahren zu einem Zeitpunkt beendet wird, zu dem bereits genug Messwerte erfasst sind, um eine sichere Prognose zu erstellen, wobei der Zeitpunkt so früh wie möglich gewählt wird, um zu einer möglichst kurzen Messzeit zu gelangen.

Gemäß der Erfindung ist vorgesehen, dass der Prozessor ausgestaltet ist, die erfassten und in dem Speicher gespeicherten Messwerte mit bekannten Messwerten zu vergleichen und bei einer ausreichenden Übereinstimmung anhand der bekannten Messwerte weitere Messwerte zu prognostizieren.

Entsprechend werden bei dem Verfahren die erfassten und in dem Speicher gespeicherten Messwerte durch den Prozessor mit bekannten Messwerten verglichen und bei einer ausreichenden Übereinstimmung anhand der bekannten Messwerte weitere Messwerte prognostiziert. Als bekannte Messwerte werden zuvor aufgenommene Messwerte eines gleichen oder vergleichbaren Mediums in dem gleichen oder einem vergleichbaren Rotationsrheometer verstanden. Es wird dann für das Verfahren eine Menge an bekannten Messwerte definiert, wobei in den bekannten Messwerten bevorzugt verschiedene typische Verläufe der Messwerte identifiziert werden. Sind in dem Verfahren ausreichend Messwerte erfasst und gespeichert, um aus den typischen Verläufen einen einzelnen zu identifizieren, dem der Verlauf der Messwerte entspricht, kann der bekannte Verlauf als Basis für die Prognose weiterer Messwerte verwendet werden. Die erfassten Messwerte werden beispielsweise mittels Mustererkennung den bekannten Messwerten zugeordnet. Demnach kann eine "ausreichende Übereinstimmung mit den bekannten Messwerten" im Falle einer Mustererkennung bedeuten, dass die erfassten Messwerte den bekannten Messwerten zugeordnet werden können.

Das Vergleichen und Prognostizieren durch den Prozessor hat den Vorteil, dass eine Tendenz der Auswertepunkte oder der Messwerte schneller erkannt wird. Es können schneller Messfehler erkannt werden. Bei einer schnelleren Tendenzerkennung ist begünstigt, dass die Messzeit zur Bestimmung der rheologischen Kennzahl weiter verkürzt werden kann.

Gemäß einer modifizierten Ausführungsform des Messsystems ist vorgesehen, dass der Prozessor ausgestaltet ist, weitere Messwerte fortlaufend zu prognostizieren, und prognostizierte Messwerte als sicher zu bestimmen, wenn eine Veränderung der prognostizierten Daten unterhalb eines Grenzwerts verbleibt.

Bevorzugt werden bei dem Verfahren weitere Messwerte fortlaufend prognostiziert, wobei prognostizierte Messwerte als ausreichend sicher bestimmt werden, wenn eine Veränderung der prognostizierten Daten unterhalb eines Grenzwerts verbleibt.

Das fortlaufende Prognostizieren der Messwerte erfolgt nach einem Vergleichen der erfassten und gespeicherten Messwerte durch den Prozessor mit bekannten Messwerten und einem Prognostizieren weiterer Messwerte bei einer ausreichenden Übereinstimmung anhand der bekannten Messwerte. In anderen Worten, es werden demnach in aufeinanderfolgenden Zeitpunkten auf Grundlage der bis dahin erfassten Messwerte Prognosen erstellt, die mit zunehmender Messzeit sicherer werden. Ist auf Grund ausreichend gespeicherter Messwerte ein Zustand erreicht, in dem eine sichere Prognose möglich ist, so verändert sich die Prognose mit dem Erfassen weiterer Messwerte nicht mehr wesentlich. Der Umstand, dass die prognostizierten Messwerte mehrerer nacheinander ausgeführter Prognosen sich nicht mehr wesentlich verändern, wird also als Indiz für eine sichere Prognose verstanden und das Verfahren kann beendet werden. Hierdurch kann die Messzeit mit Vorteil weiter verkürzt werden.

Gemäß der Erfindung ist vorgesehen, dass der Prozessor ausgestaltet ist, fortlaufend zu überprüfen, ob zur Bestimmung zumindest einer rheologischen Kennzahl notwendige Messwerte sicher prognostiziert sind, wobei das Messsystem ausgestaltet ist, die Rotation des Rotationskörpers zu beenden, sobald die notwendigen Messwerte sicher prognostiziert sind.

Bei dem Verfahren wird entsprechend fortlaufend überprüft, ob zur Bestimmung zumindest einer rheologischen Kennzahl notwendige Messwerte sicher prognostiziert sind, wobei die Rotation des Rotationskörpers beendet wird, sobald die notwendigen Messwerte sicher prognostiziert sind. Es ist so die kürzest mögliche Messzeit erreicht, die besonders vorteilhaft kürzer ist, als die Zeit bis zum Erfassen und Speichern aller notwendigen Messwerte.

In einer Ausführungsform sind die bekannten Messwerte auf dem Speicher hinterlegt und so zum Erstellen der Prognose für den Prozessor verfügbar. Es ist dann auch möglich, durch Überschreiben oder Ergänzen der auf dem Speicher hinterlegten Messwerte Updates durchzuführen, die genauere Prognosen erlauben. Insbesondere können solche bekannten Messwerte überschrieben oder ergänzt werden, wenn durch die die vielfache Durchführung des Verfahrens, bei dem notwendige Messwerte erfasst und aufgenommen werden, die Datenlage verbessert wird. Insbesondere können Messwerte für einen immer wieder gleich durchgeführtes Verfahren, also mit gleichem Medium und gleichem Ablauf, wobei sich lediglich die Qualität des Mediums unterscheidet, erfasst und gespeichert werden und als bekannte Messwerte bei der Durchführung des Verfahrens genutzt werden. Insbesondere sind auf dem Speicher Befehle gespeichert, die bei deren Ausführung durch den Prozessor diesen veranlassen, aus erfassten Messwerten typische Verläufe zu identifizieren, so dass diese als bekannte Messwerte für die Prognose verwendet werden können. Insbesondere können solche typischen Verläufe aus Messwerten identifiziert werden, die bis zum Erfassen aller notwendigen Messwerte erfasst und gespeichert wurden. Besonders bevorzugt erfolgt die Identifikation durch Selbstlernmethoden und Mustererkennung, beispielsweise mittels eines künstlichen neuronalen Netzes.

Gemäß einer bevorzugten Ausführungsform des Messsystems ist vorgesehen, dass der Prozessor ausgestaltet ist, aus den Messwerten einen Verlauf zu identifizieren, anhand dessen eine Prognose durchgeführt werden kann, wobei der Prozessor ausgestaltet ist, eine Prognosemethode anzuwenden, die für diesen Verlauf eine sichere Prognose ergibt. In diesem Zusammenfang sei ebenfalls für eine sichere Prognose ein Indiz, dass die prognostizierten Messwerte mehrerer nacheinander ausgeführter Prognosen sich nicht mehr wesentlich verändern.

Weiterhin bevorzugt werden je nach Verlauf der bekannten Messwerte weitere Messwerte mit unterschiedlichen Prognosemethoden prognostiziert. Sind also bei dem Verfahren genügend Messwerte erfasst und gespeichert, um aus den bekannten Messwerten einen typischen Verlauf zu identifizieren, anhand dessen die Prognose durchgeführt werden kann, wird eine Prognosemethode gewählt, die für diesen typischen Verlauf eine möglichst sichere Prognose ergibt.

Einer solchen Prognosemethode liegt beispielsweise eine bestimmte mathematische Methode zugrunde, die etwa einen bestimmten Extrapolationsansatz umfasst, der für verschiedene typische Verläufe unterschiedlich sein kann. Bei dem Messsystem ist dann entsprechend der Prozessor ausgestaltet, weitere Messwerte mittels einer Prognosemethode, aufweisend einen Extrapolationsansatz, zu prognostizieren.

Die Auswahl einer günstigen Prognosemethode und deren Zuordnung zu einem typischen Verlauf ist bevorzugt auf dem Speicher hinterlegt.

Besonders bevorzugt ist das Rotationsrheometer ein Farinograph und das Medium als Teig ausgebildet, der zumindest Mehl und Wasser aufweist. Mehl als landwirtschaftliches Produkt unterliegt deutlichen Schwankungen in seiner Qualität, insbesondere bezüglich der Absorptionsfähigkeit bei Wasser und dem Stärkegehalt. Es bietet sich daher an, ein Mehl vor seiner industriellen Verarbeitung zum Bestimmen des rheologischen Verhaltens des darauf hergestellten Teigs zu untersuchen. Dazu steht mit den eingangs genannten Normen ein Standardverfahren zur Durchführung in einem Farinographen bereit. Bei dem Standardverfahren sind typische Verläufe identifizierbar, so dass eine Grundlage für die Prognose von Messwerten gegeben ist.

Bevorzugt wird zunächst das Mehl in den Testbehälter eingefüllt und die Rotation des Rotationskörpers sowie die Erfassung und Speichern der Messwerte begonnen, woraufhin dem Mehl zum Ausbilden eines Teigs Wasser hinzugefügt wird. Die Messwerte sind dann in eine anfängliche Teigentwicklungszeit und eine anschließende Teigerweichung unterteilbar. In der Teigentwicklungszeit vermischen sich Mehl und Wasser, wobei die Viskosität ansteigt. Die Teigentwicklung ist abgeschlossen, wenn die Teigviskosität ein Plateau erreicht. In der darauffolgenden Teigerweichung verliert der Teig durch dauerhaftes Kneten an Struktur und verliert Viskosität, insbesondere auch im Zusammenhang mit Gärung des Teigs. Dabei lassen sich insbesondere für den Verlauf der Viskosität während der Teigerweichung typische Verläufe identifizieren. Eine sichere Prognose wird dann möglich, sobald die Teigerweichung ausreichend fortgeschritten ist, um deren Verlauf einem typischen Verlauf zuzuordnen. Insofern die dem Mehl hinzugefügte Wassermenge so gewählt wird, dass eine bestimmt Viskosität erreicht wird, kann als Stabilitätskennzahl die Zeit bestimmt werden, die die Viskosität des Teigs oberhalb der bestimmten Viskosität verbleibt.

In einer weiteren Ausführungsform ist das Rotationsrheometer ein Absorptometer und das Medium als Mischung einem Pulver und Öl ausgebildet. Bevorzugt ist das Pulver als Ruß, Kalk, Talk, Aluminiumoxid, Silica, kosmetischer Puder oder Pigmentpulver ausgebildet. Dabei wird das Pulver zuerst in den Testbehälter eingefüllt und dem Testbehälter dann Öl zugeführt, wobei die Viskosität der Mischung erfasst und gespeichert wird. Es kann dann eine definierte Menge Öl hinzugefügt werden oder so lange Öl hinzugefügt werden, bis eine bestimmte Viskosität erreicht ist, um die Ölabsorptionszahl zu ermitteln, die ein Maß für das absorbierte Öl je 100g Pulver angibt. Dazu steht mit den eingangs genannten Normen ein Standardverfahren zur Durchführung in einem Absorptometer bereit. Bei dem Standardverfahren sind typische Verläufe identifizierbar, so dass eine Grundlage für die Prognose von Messwerten gegeben ist.

Die Erfindung betrifft weiterhin eine Vorrichtung zur Datenverarbeitung, geeignet zur Verwendung in einem vorbeschriebenen Messsystem oder in einem vorbeschriebenen Verfahren, die Vorrichtung :aufweisend: Mittel zum fortlaufenden Vergleichen von Messwerten mit bekannten Messwerten, Mittel zum Prognostizieren weiterer Messwerte anhand der bekannten Messwerte bei einer ausreichenden Übereinstimmung, Mittel zur fortlaufenden Überprüfung, ob zur Bestimmung zumindest einer rheologischen Kennzahl notwendige Messwerte sicher prognostiziert sind und Mittel zum Befehlen der Beendigung der Rotation eines Rotationskörpers, sobald die notwendigen Messwerte sicher prognostiziert sind. Insbesondere ist die Datenverarbeitungsvorrichtung aus dem Prozessor und dem Speicher gebildet. Mit der Vorrichtung zur Datenverarbeitung sind im Wesentlichen die vorbeschriebenen Vorteile des Verfahrens zu erzielen bzw. das Verfahren ist mit den genannten Vorteilen durchführbar.

Letztlich betrifft die Erfindung auch ein Computerprogrammprodukt, geeignet zur Verwendung in einem vorbeschriebenen Messsystem oder in einem vorbeschriebenen Verfahren, das Computerprogrammprodukt aufweisend Befehle, die bei der Ausführung des Programms durch eine Vorrichtung zur Datenverarbeitung diese veranlassen, fortlaufend Messwerte mit bekannten Messwerten zu vergleichen, bei einer ausreichenden Übereinstimmung weitere Messwerte anhand der bekannten Messwerte zu prognostizieren, fortlaufend zu überprüfen, ob zur Bestimmung zumindest einer rheologischen Kennzahl notwendige Messwerte sicher prognostiziert sind, und zu befehlen, die Rotation eines Rotationskörpers zu beenden, sobald die notwendigen Messwerte sicher prognostiziert sind. Der Vorrichtung zur Datenverarbeitung ist insbesondere die vorgenannten Vorrichtung zur Datenverarbeitung, die aus dem Prozessor und dem Speicher gebildet ist. Mit dem Computerprogrammprodukt sind im Wesentlichen die vorbeschriebenen Vorteile des Verfahrens zu erzielen bzw. das Verfahren ist mit den genannten Vorteilen durchführbar.

### Kurze Beschreibung der Zeichnungen

Nachfolgend wird die Erfindung unter Bezugnahme auf die anliegenden Zeichnungen anhand bevorzugter Ausführungsbeispiele näher erläutert. Die Formulierung Figur ist in den Zeichnungen mit Fig. abgekürzt.

In den Zeichnungen zeigen
- Fig. 1: eine stark vereinfachte schematische Darstellung eines Messsystems zum Durchführen eines erfindungsgemäßen Verfahrens;
- Fig. 2: einen beispielhaften Verlauf von bei dem Verfahren erfassten und/oder prognostizierten Messwerten;
- Fig. 3a: beispielhafte typische Verläufe von bekannten Messwerten als Basis für die Prognose von weiteren Messwerten;
- Fig. 3b: weitere beispielhafte typische Verläufe von bekannten Messwerten als Basis für die Prognose von weiteren Messwerten.

### Detaillierte Beschreibung der Ausführungsbespiele

Die beschriebenen Ausführungsbeispiele sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wird, kann eigenständig oder in Kombination mit anderen Merkmalen in einem beliebigen anderen Ausführungsbeispiel genutzt werden. Jedes Merkmal, das für ein Ausführungsbeispiel einer bestimmten Anspruchskategorie beschrieben wird, kann auch in entsprechender Weise in einem Ausführungsbeispiel einer anderen Anspruchskategorie eingesetzt werden.

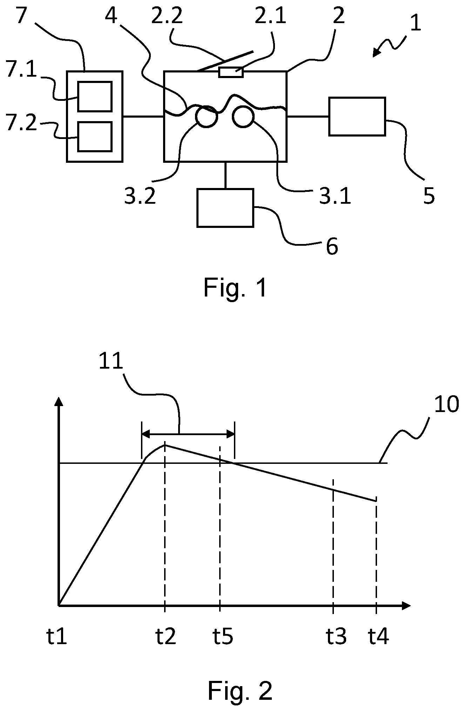

Figur 1 zeigt sehr stark vereinfacht ein Rotationsrheometer 1, entsprechend einer Ausführungsform des erfindungsgemäßen Messsystems, mit einem Testbehälter 2. Der Testbehälter 2 weist eine Öffnung 2.1 mit einem Deckel 2.2 zum Verschließen der Öffnung 2.1 auf, wobei durch die Öffnung 2.1 ein Medium 4 oder Bestandteile eines Mediums 4 in den Testbehälter 2 eingefüllt werden können. Innerhalb des Testbehälters 2 sind zwei auf zwei parallelen Achsen angeordnete Rotationskörper 3.1, 3.2 angeordnet, die beispielsweise Knethaken oder Knetmesser sind und dazu vorgesehen sind, ein in dem Testbehälter befindliches Medium 4 einer Scherung auszusetzen. Die Rotationskörper 3.1, 3.2 sind mittels eines Antriebs 5 antreibbar. Der Antrieb 5 ist beispielsweise eine elektrische Maschine. Die Antriebsleistung des Antriebs 5 ist mittels eines Getriebes auf die beiden Rotationskörper 3.1, 3.2 verteilbar oder weist zwei einzelne Antriebseinheiten jeweils für einen Rotationskörper 3.1, 3.2 auf. Das Rotationsrheometer 1 weist weiterhin einen Sensor 6 zum Erfassen von Messwerten von an den Rotationskörpern 3.1, 3.2 anliegenden Drehmomenten auf. Letztlich weist das Rotationsrheometer 1 eine Vorrichtung zur Datenverarbeitung 7 auf, die ihrerseits einen Prozessor 7.1 zum Empfangen und Verarbeiten der Messwerte und einen Speicher 7.2 zum Speichern der Messwerte aufweist. Bei dem Speicher 7.2 handelt es sich bevorzugt um einen nicht-flüchtigen Speicher.

Figur 2 zeigt einen beispielhaften Verlauf von Messwerten bei der Untersuchung eines Teigs aus Mehl und Wasser. Auf der y-Achse ist das an dem mindestens einen Rotationskörper anliegende Drehmoment aufgetragen, das während des erfindungsgemäßen Verfahrens, beispielsweise in einem Rotationsrheometer 1, gemäß Figur 1 durch den Sensor 6 erfasst, durch den Prozessor 7.1 empfangen und verarbeitet und auf dem Speicher 7.2 gespeichert wird. Auf der x-Achse ist die Zeit abgetragen.

Zu einem ersten Zeitpunkt t1 wird das Rotationsrheometer 1 gestartet, die Rotationskörper 3.1, 3.2 also in eine definierte Rotation versetzt, und die Aufzeichnung der Messwerte begonnen. Zu diesem ersten Zeitpunkt t1 ist bereits reines Mehl in einer definierten Menge in dem Testbehälter 2 eingefüllt. Unmittelbar nach dem Start des Rotationsrheometers 1 wird dem Mehl Wasser hinzugefügt. Es entsteht dann durch Durchmischung ein Teig, der bis zu einem zweiten Zeitpunkt t2 vollständig ausgebildet ist. Eine vollständige Ausbildung bedeutet, dass Mehl und Wasser gänzlich durchmischt und miteinander verbunden sind, bis der Teig seine maximale Viskosität erreicht. Dabei wird die hinzugefügte Wassermenge bevorzugt so eingestellt, dass die maximale mittlere Viskosität bei einer bestimmten Viskosität 10 erreicht ist, wobei die dafür nötige Wassermenge abhängig von der Qualität und den Eigenschaften des Mehls ist. Die hier dargestellten Verläufe entsprechen dem Drehmoment an einem Rotationskörper 3.1, wobei sich die hier nicht dargestellte mittlere Viskosität als Mittelwert der von den beiden Rotationskörpern 3.1, 3.2 aufgezeichneten Viskositäten ergibt und hier beispielhaft unterhalb der dargestellten Viskosität liegt. Nach dem Erreichen der maximalen Viskosität beginnt der Teig je nach Qualität und Eigenschaften des Mehls, zu erweichen und verliert dabei Viskosität. Die Qualität und die Eigenschaften des Mehls bestimmen dabei, wie stark der Teig erweicht.

Der zweite Zeitpunkt t2 ist dadurch definiert, dass erste Anzeichen einer Schwächung des Teigs zu erkennen sind, dass also der Verlauf auf der y-Achse sinkt oder stagniert. Der Zeitraum zwischen dem ersten Zeitpunkt t1 und dem zweiten Zeitpunkt t2 wird als Teigentwicklungszeit bezeichnet und stellt eine erste Kennzahl dar. Die dabei absorbierte Wassermenge bis zum Erreichen der bestimmten Viskosität 10 stellt eine zweite Kennzahl dar. Eine weitere Kennzahl ist die Stabilität 11, die den Zeitraum angibt, den der Verlauf des höchsten erfassten Drehmoments oberhalb der bestimmten Viskosität 10 verbleibt, bevor die Viskosität durch Erweichen des Teigs darunter abfällt. Eine weitere Kennzahl ist die Teigerweichungskennzahl, die die Viskosität bzw. das Drehmoment zu einem dritten Zeitpunkt t3 in ein Verhältnis zu der Viskosität bzw. dem Drehmoment zum zweiten Zeitpunkt t2 setzt. Der dritte Zeitpunkt t3 ist beispielsweise als 12 Minuten nach dem zweiten Zeitpunkt t2 definiert.

Insofern das Verfahren darauf gerichtet ist, die Teigerweichungskennzahl zu bestimmen, liegen zum dritten Zeitpunkt t3 alle notwendigen Messwerte dazu vor. Ein Verfahren nach dem Stand der Technik wird bis zu einem vierten Zeitpunkt t4 weitergeführt, der ausreichend spät gewählt ist, um sicher zu stellen, dass der Zeitpunkt t3, ohne diesen während dem Verfahren zu kennen, sicher erreicht wird. Bei einem erfindungsgemäßen Verfahren in einer ersten Ausführungsform wird fortlaufend überprüft, ob zur Bestimmung zumindest einer rheologischen Kennzahl notwendige Messwerte vorliegen. Es wird also beispielsweise der zweite Zeitpunkt t2 erkannt und das Verfahren zum dritten Zeitpunkt t3, der genau 12 Minuten nach dem zweiten Zeitpunkt t2 liegt, angehalten, weil dann alle notwendigen Messwerte vorliegen. Durch ein so ausgestaltetes Verfahren kann demnach gegenüber dem Stand der Technik der Zeitraum zwischen dem dritten Zeitpunkt t3 und dem vierten Zeitpunkt t4 eingespart werden und das Verfahren so vorteilhaft verkürzt werden.

Nach einer zweiten Ausführungsform wird das Verfahren angehalten, sobald zu einem fünften Zeitpunkt t5 ausreichend Messwerte vorliegen, um anhand von bekannten Messwerten eine sichere Prognose der Messwerte bis zum dritten Zeitpunkt t3 zu erstellen. Ist eine solche Prognose sicher erstellbar, liegen zum fünften Zeitpunkt t5 die notwendigen Messwerte als prognostizierte Messwerte vor und das Verfahren kann demnach beendet werden. Es wird dann gegenüber dem Stand der Technik der Zeitraum zwischen dem fünften Zeitpunkt t5 und dem vierten Zeitpunkt t4 eingespart.

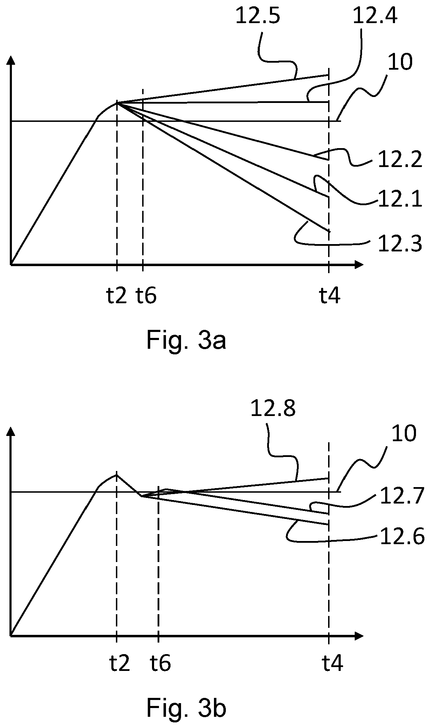

Um eine sichere Prognose zu erhalten, wird der Verlauf der Messwerte mit in den Figuren 3a und 3b dargestellten bekannten Messwerten verglichen und es wird mittels Mustererkennung und weiteren Prognosemethoden wie etwa einem Extrapolationsansatz anhand der bekannten Messwerte eine Prognose erstellt. Die Darstellungen der Figuren 3a und 3b entsprechen der Figur 2 bezüglich der Diagrammachsen. Für die Prognose wird eine Menge von bekannten Messwerten definiert, die beispielsweise aus acht typischen Verläufen 12.1, 12.2, 12.3, 12.4, 12.5, 12.6, 12.7, 12.8 besteht, die zur besseren Übersicht auf die beiden Figuren 3a, 3b verteilt dargestellt sind. Der erste typische Verlauf 12.1 ist ein normaler Verlauf bei einem Teig aus Weizenmehl und Wasser, der zweite typische Verlauf 12.2 ist der Verlauf eines stabilen Teigs, der eine verringerte Erweichung zeigt. Der dritte typische Verlauf 12.3 entspricht einem schwachen Teig, der eine stärkere Erweichung als normal zeigt. Der vierte typische Verlauf 12.4 zeigt einen ultrastabilen Teig ohne ein erkennbares Erweichen, während der fünfte typische Verlauf 12.5 einen Verlauf mit ansteigender Viskosität nach dem zweiten Zeitpunkt t2 zeigt. Der sechste typische Verlauf 12.6 zeigt einen Verlauf mit einem Peak, bei dem die Viskosität nach dem zweiten Zeitpunkt t2 zuerst stark und in der Folge mit geringerem Gradienten absinkt. Der siebte typische Verlauf 12.7 zeigt zwei Peaks, wobei nach einem ersten Absinken die Viskosität nochmals kurz ansteigt und in der Folge weiter abfällt. Der achte typische Verlauf 12.8 zeigt einen Anstieg der Viskosität nach einem ersten Abfallen.

Werden in einem erfindungsgemäßen Verfahren Messwerte aufgezeichnet, so ist beispielsweise zu einem sechsten Zeitpunkt t6 differenzierbar, welchem Verlauf von bekannten Messwerten die zum sechsten Zeitpunkt t6 erfassten und gespeicherten Messwerte entsprechen. Eine Zuordnung erfolgt dann beispielsweise über die Methode der Mustererkennung. Sind die Messwerte bekannten Messwerten zugeordnet, wird auf Basis des identifizierten typischen Verlaufs 12.1, 12.2, 12.3, 12.4, 12.5, 12.6, 12.7, 12.8 eine Prognose erstellt. Während dem erfindungsgemäßen Verfahren kann fortlaufend überprüft werden, ob bereits eine klare Zuordnung zu einem typischen Verlauf 12.1, 12.2, 12.3, 12.4, 12.5, 12.6, 12.7, 12.8 möglich ist und eine Prognose erstellt werden kann, insbesondere sicher erstellt werden kann. Das Verfahren kann dann beendet werden, sobald die Prognose sicher erstellt ist. Im einfachsten Fall entspricht dabei der sechste Zeitpunkt t6 dem fünften Zeitpunkt t5. Der fünfte Zeitpunkt t5 kann jedoch auch erst nach dem sechsten Zeitpunkt t6 erreicht werden, weil für eine sichere Prognose weitere Bedingungen erfüllt sein müssen als die Differenzierbarkeit zwischen den typischen Verläufen 12.1, 12.2, 12.3, 12.4, 12.5, 12.6, 12.7, 12.8.

Weitere typische Verläufe, insbesondere für andere Medien oder Systeme aus Medien und Rotationsrheometer können auf dem Speicher aufgespielt werden. Es kann auch vorgesehen sein, dass durch das Durchführen einer Vielzahl von Untersuchungen, beispielsweise jeweils bis zum dritten Zeitpunkt t3 oder bis zum vierten Zeitpunkt t4, eine Datenmenge erzeugt wird, aus der der Prozessor andere typische Verläufe identifizieren kann, beispielsweise mittels eines künstlichen neuronalen Netzes.

### Bezugszeichenliste

- 1: Rotationsrheometer
- 2: Testbehälter
- 2.1: Öffnung
- 2.2: Deckel
- 3.1: Rotationskörper
- 3.2: Rotationskörper
- 4: Medium
- 5: Antrieb
- 6: Sensor
- 7: Vorrichtung zur Datenverarbeitung
- 7.1: Prozessor
- 7.2: Speicher
- 10: bestimmte Viskosität
- 11: Stabilität
- 12.1 bis 12.8: typische Verläufe der Messwerte

- t1: erster Zeitpunkt
- t2: zweiter Zeitpunkt
- t3: dritter Zeitpunkt
- t4: vierter Zeitpunkt
- t5: fünfter Zeitpunkt
- t6: sechster Zeitpunkt

## Patentansprüche

1. Messsystem, insbesondere Rotationsrheometer (1), zum Bestimmen zumindest einer rheologischen Kennzahl eines Mediums (4), das Messsystem aufweisend:
- einen Testbehälter (2),
- einen Antrieb (5) zum Antreiben zumindest eines in dem Testbehälter (2) angeordneten Rotationskörpers (3.1, 3.2),
- den zumindest einen in dem Testbehälter (2) angeordneten Rotationskörper (3.1, 3.2),
- einen Sensor (6) zum Erfassen von Messwerten von an dem Rotationskörper (3.1, 3.2) anliegenden Drehmomenten,
- einen Prozessor (7.1) zum Empfangen und Verarbeiten der Messwerte,
- einen Speicher (7.2) zum Speichern der Messwerte,
wobei der Rotationskörper (3.1, 3.2) und der Antrieb ausgestaltet sind, in dem Testbehälter (2) das Medium (4) durch eine definierte Rotation des Rotationskörpers (3.1, 3.2) einer Scherung auszusetzen und
der Sensor (6) ausgestaltet ist, bei der definierten Rotation des Rotationskörpers (3.1, 3.2) Messwerte zu messen, der Prozessor (7.1) ausgestaltet ist, die Messwerte zu empfangen und zu verarbeiten und der Speicher (7.2) ausgestaltet ist, die Messwerte zu speichern,
**dadurch gekennzeichnet, dass** der Prozessor (7.1) ausgestaltet ist, die erfassten und in dem Speicher (7.2) gespeicherten Messwerte fortlaufend mit bekannten Messwerten zu vergleichen und bei einer ausreichenden Übereinstimmung anhand der bekannten Messwerte weitere Messwerte zu prognostizieren,
wobei der Prozessor (7.1) ausgestaltet ist, fortlaufend zu überprüfen, ob zur Bestimmung zumindest einer rheologischen Kennzahl notwendige Messwerte sicher prognostiziert sind, und
wobei das Messsystem ausgestaltet ist, die Rotation des Rotationskörpers (3.1, 3.2) zu beenden, sobald die notwendigen Messwerte sicher prognostiziert sind.

2. Messsystem nach Anspruch 1, wobei der Prozessor (7.1) ausgestaltet ist, prognostizierte Messwerte als sicher zu bestimmen, wenn eine Veränderung der prognostizierten Daten unterhalb eines Grenzwerts verbleibt.

3. Messsystem nach einem der vorherigen Ansprüche, wobei der Prozessor (7.1) ausgestaltet ist, aus den Messwerten einen Verlauf zu identifizieren, anhand dessen eine Prognose durchgeführt werden kann, wobei der Prozessor (7.1) ausgestaltet ist, eine Prognosemethode anzuwenden, die für diesen Verlauf eine sichere Prognose ergibt.

4. Messsystem nach einem der vorherigen Ansprüche, wobei der Prozessor (7.1) ausgestaltet ist, weitere Messwerte mittels einer Prognosemethode, aufweisend einen Extrapolationsansatz, zu prognostizieren.

5. Messsystem nach einem der vorherigen Ansprüche, wobei das Messsystem ein Farinograph ist und das Medium (4) als Teig ausgebildet ist, der zumindest Mehl und Wasser aufweist.

6. Messsystem nach einem der vorherigen Ansprüche, wobei das Messsystem ein Absorptometer ist und das Medium (4) als Mischung aus einem Pulver und Öl ausgebildet ist.

7. Verfahren zum Bestimmen zumindest einer rheologischen Kennzahl eines Mediums (4) mit einem Messsystem, insbesondere einem Rotationsrheometer (1), wobei das Messsystem aufweist:
- einen Testbehälter (2),
- zumindest einen in dem Testbehälter (2) angeordneten Rotationskörper (3.1, 3.2), wobei der Rotationskörper (3.1, 3.2) durch einen Antrieb (5) antreibbar ist,
- einen Sensor (6) zum Erfassen von Messwerten von an dem Rotationskörper (3.1, 3.2) anliegenden Drehmomenten,
- einen Prozessor (7.1) zum Empfangen und Verarbeiten der Messwerte,
- einen Speicher (7.2) zum Speichern der Messwerte,
wobei in dem Testbehälter (2) das Medium (4) durch eine definierte Rotation des Rotationskörpers (3.1, 3.2) einer Scherung ausgesetzt wird und dabei die von dem Sensor (6) erfassten Messwerte mittels des Prozessors (7.1) empfangen und verarbeitet und mittels des Speichers (7.2) gespeichert werden,
**dadurch gekennzeichnet, dass** die erfassten und in dem Speicher (7.2) gespeicherten Messwerte fortlaufend mit bekannten Messwerten verglichen und bei einer ausreichenden Übereinstimmung anhand der bekannten Messwerte weitere Messwerte prognostizieren werden,
wobei fortlaufend überprüft wird, ob zur Bestimmung zumindest einer rheologischen Kennzahl notwendige Messwerte sicher prognostiziert sind, und
wobei die Rotation des Rotationskörpers (3.1, 3.2) beenden wird, sobald die notwendigen Messwerte sicher prognostiziert sind.

8. Verfahren nach Anspruch 7, wobei das Medium (4) als Teig ausgebildet ist, der zumindest Mehl und Wasser aufweist, und wobei zum Herstellen des Teigs zunächst das Mehl in den Testbehälter (2) eingefüllt wird und die Rotation des Rotationskörpers (3.1, 3.2) sowie die Erfassung und Speicherung der Messwerte begonnen wird, woraufhin dem Mehl zum Ausbilden des Teigs zumindest Wasser hinzugefügt wird.

9. Verfahren nach Anspruch 8, wobei die zumindest eine rheologische Kennzahl die Teigerweichungskennzahl ist.

10. Verfahren nach Anspruch 7, wobei das Medium (4) als Mischung aus einem Pulver und Öl ausgebildet ist, und wobei zum Herstellen der Mischung zunächst das Pulver in den Testbehälter (2) eingefüllt wird und die Rotation des Rotationskörpers (3.1, 3.2) sowie die Erfassung und Speicherung der Messwerte begonnen wird, woraufhin dem Pulver zum Ausbilden der Mischung zumindest Öl hinzugefügt wird, wobei insbesondere die zumindest eine rheologische Kennzahl die Ölzahl ist.

11. Vorrichtung zur Datenverarbeitung (7), geeignet zur Verwendung in einem Messsystem nach einem der Ansprüche 1 bis 6 oder in einem Verfahren nach einem der Ansprüche 7 bis 10, die Vorrichtung aufweisend:
Mittel zum fortlaufenden Vergleichen von Messwerten mit bekannten Messwerten;
Mittel zum Prognostizieren weiterer Messwerte anhand der bekannten Messwerte bei einer ausreichenden Übereinstimmung;
Mittel zur fortlaufenden Überprüfung, ob zur Bestimmung zumindest einer rheologischen Kennzahl notwendige Messwerte sicher prognostiziert sind; und
Mittel zum Befehlen der Beendigung der Rotation eines Rotationskörpers (3.1, 3.2), sobald die notwendigen Messwerte sicher prognostiziert sind.

12. Computerprogrammprodukt, geeignet zur Verwendung in einem Messsystem nach einem der Ansprüche 1 bis 6 oder in einem Verfahren nach einem der Ansprüche 7 bis 10, das Computerprogrammprodukt aufweisend Befehle, die bei der Ausführung des Programms durch eine Vorrichtung zur Datenverarbeitung (7) diese veranlassen,
fortlaufend Messwerte mit bekannten Messwerten zu vergleichen,
bei einer ausreichenden Übereinstimmung weitere Messwerte anhand der bekannten Messwerte zu prognostizieren,
fortlaufend zu überprüfen, ob zur Bestimmung zumindest einer rheologischen Kennzahl notwendige Messwerte sicher prognostiziert sind, und
zu befehlen, die Rotation eines Rotationskörpers (3.1, 3.2) zu beenden, sobald die notwendigen Messwerte sicher prognostiziert sind.

## Claims

1. A measuring system, in particular a rotary rheometer (1), for determining at least one rheological characteristic of a medium (4), the measuring system comprising:
- a test container (2),
- a drive (5) for driving at least one rotary body (3.1, 3.2) arranged in the test container (2),
- the at least one rotary body (3.1, 3.2) arranged in the test container (2),
- a sensor (6) for acquiring measured values of torques acting on the rotary body (3.1, 3.2),
- a processor (7.1) for receiving and processing the measured values,
- a memory (7.2) for storing the measured values,
wherein the rotary body (3.1, 3.2) and the drive are configured to subject the medium (4) in the test container (2) to shear by a defined rotation of the rotary body (3.1, 3.2) and
the sensor (6) is configured to measure measured values during the defined rotation of the rotary body (3.1, 3.2), the processor (7.1) is configured to receive and process the measured values, and the memory (7.2) is configured to store the measured values,
**characterized in that** the processor (7.1) is configured to continuously compare the measured values acquired and stored in the memory (7.2) with known measured values and, in the event of a sufficient match, to predict further measured values on the basis of the known measured values, wherein the processor (7.1) is configured to continuously check whether measured values necessary for the determination of at least one rheological characteristic have been reliably predicted and
wherein the measuring system is configured to terminate the rotation of the rotary body (3.1, 3.2) as soon as the necessary measured values have been reliably predicted.

2. The measuring system according to claim 1, wherein the processor (7.1) is configured to determine predicted measured values to be reliable if a change in the predicted data remains below a threshold.

3. The measuring system according to any one of the preceding claims, wherein the processor (7.1) is configured to identify, from the measured values, a time series on the basis of which a prediction is able to be performed, wherein the processor (7.1) is configured to apply a prediction method which yields a reliable prediction for this particular time series.

4. The measuring system according to any one of the preceding claims, wherein the processor (7.1) is configured to predict further measured values by means of a prediction method comprising an extrapolation approach.

5. The measuring system according to any one of the preceding claims, wherein the measuring system is a farinograph and the medium (4) is in the form of a dough which comprises at least flour and water.

6. The measuring system according to any one of the preceding claims, wherein the measuring system is an absorption tester and the medium (4) is in the form of a mixture of a powder and oil.

7. A method for determining at least one rheological characteristic of a medium (4) using a measuring system, in particular a rotary rheometer (1), wherein the measuring system comprises:
- a test container (2),
- at least one rotary body (3.1, 3.2) arranged in the test container (2), wherein the rotary body (3.1, 3.2) is drivable by a drive (5),
- a sensor (6) for acquiring measured values of torques acting on the rotary body (3.1, 3.2),
- a processor (7.1) for receiving and processing the measured values,
- a memory (7.2) for storing the measured values,
wherein the medium (4) in the test container (2) is subjected to shear by a defined rotation of the rotary body (3.1, 3.2) while the measured values acquired by the sensor (6) are received and processed by the processor (7.1) and stored by the memory (7.2),
**characterized in that** the measured values acquired and stored in the memory (7.2) are continuously compared with known measured values and, in the event of a sufficient match, further measured values are predicted on the basis of the known measured values,
wherein it is continuously checked whether measured values necessary for determination of at least one rheological characteristic have been reliably predicted and
wherein the rotation of the rotary body (3.1, 3.2) is terminated as soon as the necessary measured values have been reliably predicted.

8. The method according to claim 7, wherein the medium (4) is in the form of a dough which comprises at least flour and water and wherein, for producing the dough, first the flour is filled into the test container (2) and the rotation of the rotary body (3.1, 3.2) as well as the acquisition and storage of the measured values are started, whereupon at least water is added to the flour for forming the dough.

9. The method according to claim 8, wherein the at least one rheological characteristic is the Degree of Softening.

10. The method according to claim 7, wherein the medium (4) is in the form of a mixture of a powder and oil and wherein, for producing the mixture, first the powder is filled into the test container (2) and the rotation of the rotary body (3.1, 3.2) as well as the acquisition and storage of the measured values are started, whereupon at least oil is added to the powder for forming the mixture, wherein in particular the at least one rheological characteristic is the oil absorption number.

11. A data processing device (7) suitable for use in a measuring system according to any one of claims 1 to 6 or in a method according to any one of claims 7 to 10, the device comprising:
means for continuously comparing measured values with known measured values;
means for predicting further measured values on the basis of the known measured values in case of a sufficient match;
means for continuously checking whether measured values necessary for determination of at least one rheological characteristic have been reliably predicted; and
means for instructing the termination of the rotation of a rotary body (3.1, 3.2) as soon as the necessary measured values have been reliably predicted.

12. A computer program product suitable for use in a measuring system according to any one of claims 1 to 6 or in a method according to any one of claims 7 to 10, the computer program product comprising instructions which, when the program is executed by a data processing device (7), cause the data processing device to
continuously compare measured values with known measured values,
predict, in case of a sufficient match, further measured values on the basis of the known measured values,
continuously check whether measured values necessary for determination of at least one rheological characteristic have been reliably predicted, and
instruct that the rotation of a rotary body (3.1, 3.2) be terminated as soon as the necessary measured values have been reliably predicted.

## Revendications

1. Système de mesure, en particulier un rhéomètre rotatif (1), destiné à déterminer au moins une caractéristique rhéologique d'un milieu (4), le système de mesure comprenant:
- un récipient d'essai(2),
- un entraînement (5) pour entraîner au moins un corps rotatif (3.1, 3.2) disposé dans le récipient d'essai (2),
- au moins un corps rotatif(3.1, 3.2) disposé dans le récipient d'essai(2),
- un capteur (6) pour acquérir les valeurs mesurées des couples agissant sur le corps rotatif (3.1, 3.2),
- un processeur (7.1) pour recevoir et traiter les valeurs mesurées,
- une mémoire (7.2) pour stocker les valeurs mesurées, dans lequel le corps rotatif (3.1, 3.2) et l'entraînement sont conçus pour soumettre le milieu (4) contenu dans le récipient d'essai (2) à un cisaillement par une rotation définie du corps rotatif (3.1, 3.2) et
le capteur (6) est conçu pour mesurer les valeurs mesurées pendant la rotation définie du corps rotatif (3.1, 3.2), le processeur (7.1) est conçu pour recevoir et traiter les valeurs mesurées, et la mémoire (7.2) est conçue pour stocker les valeurs mesurées,
**caractérisé en ce que** le processeur (7.1) est conçu pour comparer en continu les valeurs mesurées acquises et stockées dans la mémoire (7.2) avec des valeurs mesurées connues et, en cas de correspondance suffisante, pour prédire d'autres valeurs mesurées sur la base des valeurs mesurées connues,
dans lequel le processeur (7.1) est conçu pour vérifier en continu si des valeurs mesurées nécessaires à la détermination d'au moins une caractéristique rhéologique ont été prédites de manière fiable et
dans lequel le système de mesure est conçu pour arrêter la rotation du corps rotatif (3.1, 3.2) dès que les valeurs mesurées nécessaires ont été prédites de manière fiable.

2. Système de mesure selon la revendication 1, dans lequel le processeur (7.1) est conçu pour déterminer que les valeurs mesurées prédites sont fiables si une variation des données prédites reste inférieure à un seuil.

3. Système de mesure selon l'une quelconque des revendications précédentes, dans lequel le processeur (7.1) est conçu pour identifier, à partir des valeurs mesurées, une série temporelle sur la base de laquelle une prédiction peut être effectuée, dans lequel le processeur (7.1) est conçu pour appliquer un procédé de prédiction qui fournit une prédiction fiable pour la série temporelle.

4. Système de mesure selon l'une quelconque des revendications précédentes, dans lequel le processeur (7.1) est conçu pour prédire d'autres valeurs mesurées au moyen d'un procédé de prédiction comprenant une approche d'extrapolation.

5. Système de mesure selon l'une quelconque des revendications précédentes, dans lequel le système de mesure est un farinographe et le milieu (4) se présente sous la forme d'une pâte qui comprend au moins de la farine et de l'eau.

6. Système de mesure selon l'une quelconque des revendications précédentes, dans lequel le système de mesure est un testeur d'absorption et le milieu (4) se présente sous la forme d'un mélange de poudre et d'huile.

7. Procédé permettant de déterminer au moins une caractéristique rhéologique d'un milieu (4) à l'aide d'un système de mesure, en particulier d'un rhéomètre rotatif (1), dans lequel le système de mesure comprend:
- un récipient d'essai (2),
- au moins un corps rotatif (3.1, 3.2) disposé dans le récipient d'essai (2), dans lequel le corps rotatif (3.1, 3.2) peut être entraîné par un entraînement (5),
- un capteur (6) pour acquérir les valeurs mesurées des couples agissant sur le corps rotatif (3.1, 3.2),
- un processeur (7.1) pour recevoir et traiter les valeurs mesurées,
- une mémoire (7.2) pour stocker les valeurs mesurées, dans lequel le milieu (4) dans le récipient d'essai (2) est soumis à un cisaillement par une rotation définie du corps rotatif (3.1, 3.2) tandis que les valeurs mesurées acquises par le capteur (6) sont reçues et traitées par le processeur (7.1) et stockées dans la mémoire (7.2), **caractérisé en ce que** les valeurs mesurées acquises et stockées dans la mémoire (7.2) sont comparées en continu à des valeurs mesurées connues et, en cas de correspondance suffisante, d'autres valeurs mesurées sont prédites sur la base des valeurs mesurées connues,
dans lequel on vérifie en continu si les valeurs mesurées nécessaires à la détermination d'au moins une caractéristique rhéologique ont été prédites de manière fiable et
dans lequel la rotation du corps rotatif (3.1, 3.2) est arrêtée dès que les valeurs mesurées nécessaires ont été prédites de manière fiable.

8. Procédé selon la revendication 7, dans lequel le milieu (4) se présente sous la forme d'une pâte qui comprend au moins de la farine et de l'eau et dans lequel, pour produire la pâte, on introduit d'abord la farine dans le récipient d'essai (2) et on déclenche la rotation du corps rotatif (3.1, 3.2) ainsi que l'acquisition et le stockage des valeurs mesurées, après quoi on ajoute au moins de l'eau à la farine pour former la pâte.

9. Procédé selon la revendication 8, dans lequel ladite au moins une caractéristique rhéologique est l'indice de ramollissement de la pâte.

10. Procédé selon la revendication 7, dans lequel le milieu (4) se présente sous la forme d'un mélange de poudre et d'huile et dans lequel, pour produire le mélange, la poudre est d'abord introduite dans le récipient d'essai (2) et on déclenche la rotation du corps rotatif (3.1, 3.2) ainsi que l'acquisition et le stockage des valeurs mesurées, après quoi on ajoute au moins de l'huile à la poudre pour former le mélange, dans lequel en particulier, ladite au moins une caractéristique rhéologique est l'indice d'absorption d'huile.

11. Dispositif de traitement de données (7) approprié pour être utilisé dans un système de mesure selon l'une quelconque des revendications 1 à 6 ou dans un procédé selon l'une quelconque des revendications 7 à 10, le dispositif comprenant:
un moyen pour comparer en continu les valeurs mesurées avec les valeurs mesurées connues;
un moyen pour prédire d'autres valeurs mesurées sur la base des valeurs mesurées connues en cas de correspondance suffisante;
un moyen pour vérifier en continu si les valeurs mesurées nécessaires à la détermination d'au moins une caractéristique rhéologique ont été prédites de manière fiable; et
un moyen pour ordonner l'arrêt de la rotation d'un corps rotatif (3.1, 3.2) dès que les valeurs mesurées nécessaires ont été prédites de manière fiable.

12. Produit de programme informatique approprié pour être utilisé dans un système de mesure selon l'une quelconque des revendications 1 à 6 ou dans un procédé selon l'une quelconque des revendications 7 à 10, le produit de programme informatique comprenant des instructions qui, lorsque le programme est exécuté par un dispositif de traitement de données (7), amènent le dispositif de traitement de données à
comparer en continu les valeurs mesurées avec les valeurs mesurées connues,
à prédire, en cas de correspondance suffisante, d'autres valeurs mesurées sur la base des valeurs mesurées connues,
à vérifier en continu si les valeurs mesurées nécessaires à la détermination d'au moins une caractéristique rhéologique ont été prédites de manière fiable, et
à ordonner l'arrêt de la rotation d'un corps rotatif (3.1, 3.2) dès que les valeurs mesurées nécessaires ont été prédites de manière fiable.
